# EUROPÄISCHE PATENTSCHRIFT

(11) **EP 2 920 060 B1**
(45) Veröffentlichungstag und Bekanntmachung des Hinweises auf die Patenterteilung: **29.08.2018**
(21) Anmeldenummer: 13798245.0
(22) Anmeldetag: 11.11.2013
(51) Int. Cl.: B63H 20/12, B63H 21/36, H01H 47/00, H01M 2/12, H01M 10/0525, B63H 23/24, B63J 3/04, B63H 21/17

(54) **BOOT MIT ELEKTROANTRIEB**
BOAT WITH ELECTRIC DRIVE
BATEAU POURVU D'UN ENTRAÎNEMENT ÉLECTRIQUE

(30) Priorität: 12.11.2012 DE 102012021996
(43) Veröffentlichungstag der Anmeldung: 23.09.2015
(73) Patentinhaber: Torqeedo GmbH, 82205 Gilching (DE)
(72) Erfinder: BIEBACH, Jens, 82327 Tutzing (DE); KRIEGER, Philipp, 82340 Feldafing (DE); HARTMEYER, Marc, 81829 München (DE)
(74) Vertreter: Nordmeyer, Philipp Werner
(86) Internationale Anmeldenummer: PCT/EP2013/003395
(87) Internationale Veröffentlichungsnummer: WO 2014/072074

(56) Entgegenhaltungen:
- US-A1- 2010 125 383

## Beschreibung

Die Anmeldung betrifft ein Boot mit einem Elektroantrieb und einer Hauptspannungsquelle, die Energie für den Elektroantrieb zur Verfügung stellt und mit einer Hilfsspannungsquelle, die Energie für mindestens eine Zusatzkomponente bereitstellt. Ferner betrifft die Erfindung ein Verfahren zum Laden einer auf einem Boot mit einem Elektroantrieb befindlichen Hilfsspannungsquelle, die Energie für mindestens eine Zusatzkomponente bereitstellt, wobei sich auf dem Boot eine Hauptspannungsquelle befindet, die Energie für den Elektroantrieb zur Verfügung stellt.

Die Anmeldung befasst sich mit einem Boot mit Elektroantrieb mit zugeordneter Gleichspannungsquelle zur Leistungsversorgung verschiedener elektrischer Komponenten, insbesondere Antriebskomponenten und mit einer weiteren-Gleichspannungsquelle zur Stromversorgung von beispielsweise Steuer- und Überwachungskomponenten.

Häufig ist es notwendig, in einem Boot mit Elektroantrieb zwei separate Energiespeicher, beispielsweise Batterien, vorzusehen. Die Notwendigkeit der Verwendung zweier Energiespeicher kann sich z.B. aus unterschiedlichen Anforderungen hinsichtlich der Verfügbarkeit für die Antriebs- / Leistungskomponenten sowie der Steuerkomponenten ergeben. Meistens haben auch Komponenten des Leistungskreises und Komponenten des Steuerkreises unterschiedliche Anforderungen an die Höhe der Versorgungsspannung, so dass Energiespeicher mit unterschiedlicher Spannung bereit gestellt werden müssen.

Aus diesem Grund werden auf dem Boot eine Hauptspannungsquelle zur Stromversorgung der Leistungskomponenten, z.B. des Elektroantriebs, insbesondere des Elektromotors, und eine Hilfsspannungsquelle zur Stromversorgung der beispielsweisen Steuerkomponenten vorgesehen. Da die Leistungskomponenten über den höheren Energiebedarf verfügen, ist der Energieinhalt der Hauptspannungsquelle größer als der Energieinhalt der Hilfsspannungsquelle.

BESTÄTIGUNGSKOP Das Dokument US 2010/125383 A1 wird als nächstliegender Stand der Technik angesehen und offenbart den Oberbegriff des Anspruchs 1. IE

Aufgabe vorliegender Erfindung ist es, ein Verfahren zum Laden der Hilfsspannungsquelle eines Bootes vorzuschlagen.

Diese Aufgabe wird durch ein Verfahren mit den Merkmalen von Anspruch 1 gelöst. Zum Laden der Hauptspannungsquelle wird das Boot mit einer Spannungsquelle an Land verbunden. Die Erfindung ermöglicht das Laden der Hilfsspannungsquelle aus der Hauptspannungsquelle. Die Hilfsspannungsquelle muss daher nicht mit einer Stromversorgung an Land verbunden werden. Es muss daher nur eine Schnittstelle / Verbindungsstelle zwischen der elektrischen Anlage an Bord des Bootes und dem Land hergestellt werden.

Zur Benutzung des Bootes muss das Boot vom Landanschluss getrennt werden, so dass das Laden der Hauptspannungsquelle eingestellt wird. Nach dem Trennen des Landanschlusses ist erfindungsgemäß ein weiteres Laden der Hilfsspannungsquelle aus der Hauptspannungsquelle möglich. Somit kann auch während des Fahrens ein ausreichender Ladezustand der Hilfsspannungsquelle und damit eine sichere Versorgung der Steuerungs- und insbesondere der Sicherheitskomponenten sichergestellt werden.

Auf einem Boot sind in der Regel alle sicherheitsrelevanten Komponenten, wie zum Beispiel eine Notausschleife, ein Isolationswächter, ein Wasserwächter, eine Fahrsteuerung oder ein GPS, an die Hilfsspannungsquelle angeschlossen. Andererseits werden üblicherweise auch dem Komfort dienende Zusatzkomponenten, wie z.B. Kühlaggregate, Heizelemente, Beleuchtung, an die Hilfsspannungsquelle angeschlossen. Es besteht die Gefahr, dass die Hilfsspannungsquelle durch diese zusätzlichen elektrischen Verbraucher so stark belastet und entladen wird, dass deren Energieinhalt auf einen Wert absinkt, der nicht mehr ausreicht, um die Sicherheitskomponenten mit Strom zu versorgen.

Die Sicherheitskomponenten dienen beispielsweise dazu, die Anschlussklemmen einer Hochvoltspannungsquelle beim Auftreten von Problemen spannungsfrei zu schalten. So kann beispielsweise bei einem Ausfall einer Sicherheitskomponente die elektrische Verbindung zwischen den Zellen der Hauptspannungsquelle und den Anschlussklemmen der Hauptspannungsquelle unterbrochen werden, so dass der an die Anschlussklemmen angeschlossene Elektroantrieb nicht mehr mit Strom versorgt wird, obwohl die Hauptspannungsquelle noch einen ausreichenden Energieinhalt aufweist. Das Boot wird nicht mehr manövrierfähig, wodurch eine für die Besatzung des Bootes gefährliche Situation entstehen kann. Erfindungsgemäß besteht dann die Möglichkeit, die Hilfsspannungsquelle an Bord des Bootes aus der Hauptspannungsquelle zu laden.

Bei einem Boot mit einem Elektroantrieb größerer Leistung wird der Elektroantrieb meist als Hochvoltsystem ausgeführt, um die Stromhöhe im Antriebssystem beherrschbar zu halten. Die Steuer-, Überwachungs- und Sicherheitseinrichtungen, mit denen der Elektroantrieb gesteuert, überwacht und abgesichert wird, sind dagegen keine Leistungskomponenten und werden daher meistens als Niedervoltsysteme ausgeführt. In einer Ausführungsform der Erfindung wird daher als Hauptspannungsquelle eine Hochvoltspannungsquelle und als Hilfsspannungsquelle eine Niedervoltspannungsquelle vorgesehen.

Als Hochvoltspannungsquelle sollen insbesondere Spannungsquellen mit einer Klemmenspannung von mehr als 60 Volt, mehr als 100 Volt oder mehr als 200 Volt bezeichnet werden. Eine Niedervoltspannungsquelle soll vorzugsweise maximal 48 Volt, maximal 24 Volt oder maximal 12 Volt Klemmenspannung aufweisen.

Erfindungsgemäß wird die Hilfsspannungsquelle, insbesondere eine Niedervoltspannungsquelle, aus der Hauptspannungsquelle, insbesondere einer Hochvoltspannungsquelle, geladen. Hierzu ist ein Hilfsladegerät für die Hilfsspannungsquelle vorgesehen, welches an die Hauptspannungsquelle angeschlossen wird und welches die Hilfsspannungsquelle aus der Hauptspannungsquelle lädt. So ist beispielsweise bei einer als Hochvoltspannungsquelle ausgeführten Hauptspannungsquelle und einer als Niedervoltspannungsquelle ausgeführten Hilfsspannungsquelle das Hilfsladegerät mit einem DC-DC-Wandler versehen, mit dessen Hilfe die höhere Spannung der Hochvoltspannungsquelle auf das niedrigere Spannungsniveau der Hilfsspannungsquelle transformiert werden kann.

Die Hauptspannungsquelle dient zur Stromversorgung des elektrischen Antriebs, insbesondere eines Elektromotors. Der elektrische Antrieb hat eine deutlich höhere Leistung als die an die Hilfsspannungsquelle angeschlossenen Hilfsaggregate. Entsprechend besitzt die Hauptspannungsquelle einen wesentlich größeren Energieinhalt als die Hilfsspannungsquelle. Das Hauptladegerät zum Laden der Hauptspannungsquelle hat entsprechend ebenfalls eine deutlich größere Leistung als ein Ladegerät zum Laden der Hilfsspannungsquelle. Vorzugsweise wird das Hauptladegerät so ausgelegt, dass es in einer vorgegebenen Zeitspanne gleichzeitig die Hauptspannungsquelle und die an die Hauptspannungsquelle angeschlossene Hilfsspannungsquelle laden kann. Da das Hauptladegerät hierfür, im Vergleich zum Laden der Hauptspannungsquelle allein, nur geringfügig mehr Leistung aufbringen muss, kann das Hauptladegerät mit geringem Mehraufwand so ausgelegt werden, dass es zusätzlich auch die Hilfsspannungsquelle versorgen kann.

Sowohl die Hauptspannungsquelle als auch die Hilfsspannungsquelle sind vorzugsweise als wiederaufladbare Batterien oder Akkumulatoren ausgeführt. Die Anmeldung kann bei Batterien mit beliebiger Zellchemie eingesetzt werden. Bevorzugt werden als Spannungsquellen, als Haupt- und/oder Hilfsspannungsquelle, Lithium-Batterien, Lithium-Ionen-Batterien, Lithium-Mangan-Batterien oder Lithium-Mangan-Kobalt-Batterien eingesetzt.

Hochvoltspannungsquellen verfügen meistens über eine eigene Steuereinrichtung. Diese Steuereinrichtung wird häufig aus einer Niederspannungsquelle versorgt. Zur Sicherheit der Nutzer kann z.B. eine Steuereinrichtung vorgesehen sein, welche sicherstellt, dass die Hochvoltspannungsquelle ihre Spannung nur dann an deren Anschlussklemmen schalten kann, wenn sie mit einer Niedervoltspannungsquelle versorgt wird. Das heißt, die Niedervoltspannungsquelle muss bereits vor dem Beginn des Ladens der Hochvoltspannungsquelle verfügbar sein.

Vorzugsweise wird eine Niedervoltspannungsquelle vorgesehen, welche einen Energieinhalt besitzt, der ausreichend groß ist, dass er bei zu berücksichtigender Entladung durch Zusatzkomponenten und weitere Verbraucher sowie bei anzunehmender Selbstentladung die Zuschaltung der Hochvoltspannungsquelle nach einer üblichen Zeitspanne noch möglich macht. Vorzugsweise besitzt die Niedervoltspannungsquelle eine Ladung von mindestens 30 Ah, bevorzugt mindestens 40 Ah. Bei einem Sportboot hätte eine hierfür geeignete Batterie z.B. mindestens 44Ah.

Nach dem Zuschalten der Hochvoltspannungsquelle kann die Niedervoltspannungsquelle aus der Hochvoltspannungsquelle geladen werden. Gleichzeitig kann aber auch die Hochvoltspannungsquelle mittels eines Hauptladegeräts geladen werden. Das Hauptladegerät für die Hochvoltspannungsquelle sollte deshalb über eine Leistung verfügen, die zum gleichzeitigen Laden der Hochvolt- und Niedervoltspannungsquelle geeignet ist.

Die Hauptspannungsquelle kann mit einem Hauptladegerät, welches sich auf dem Boot oder welches sich auf dem Land befindet, geladen werden. Befindet sich das Hauptladegerät auf dem Land, ist eine Gleichspannungsverbindung zwischen dem Land und dem Boot erforderlich. Befindet sich das Ladegerät für die Hauptspannungsquelle auf dem Boot, ist eine Wechselspannungsverbindung zwischen dem Land und dem Boot erforderlich.

Da die Hilfsspannungsquelle auch zur Versorgung von Zusatzkomponenten Verwendung finden soll, ist eine elektrische Entkopplung der Spannungsversorgung der Zusatzkomponenten und der Spannungsversorgung der system- und sicherheitsrelevanten Komponenten von Vorteil.

Dies wird beispielsweise dadurch erreicht, dass die Spannungsversorgung der Zusatzkomponenten und die Spannungskomponenten der sicherheitsrelevanten Komponenten mittels eines Schalters oder eines rückwärts sperrenden Ventils, wie zum Beispiel mittels einer Diode, voneinander entkoppelt werden, so dass ein Einbrechen der Spannungsversorgung der Zusatzkomponenten durch erhöhte Leistungsentnahme nicht auf die Spannungsversorgung der sicherheitsrelevanten Komponenten durchschlägt.

Als Spannungsversorgung für die Zusatzkomponenten wird vorzugsweise die Hilfsspannungsquelle eingesetzt und die sicherheitsrelevanten Komponenten werden von Vorteil über einen DC/DC-Wandler aus der Hauptspannungsquelle mit Strom versorgt. Die Spannungsversorgung über die Hilfsspannungsquelle stellt sicher, dass die Zusatzkomponenten auch bei impulsförmigem Leistungsbedarf sicher versorgt werden. Der Betrieb eines Hilfsmotors für das Trimmen und / oder das Tilten eine Außenbordmotors stellt eine typische Impulslast dar, die durch die Hilfsspannungsquelle gepuffert werden muss.

Sollte es zu einer kurzfristigen Überlastung der Hilfsspannungsquelle kommen, ist der Betrieb der sicherheitsrelevanten Komponenten nicht gefährdet, da diese Komponenten über eine eigene Spannungsversorgung verfügen und von der Hilfsspannungsquelle durch einen Schalter oder ein rückwärts sperrendes Ventil entkoppelt sind.

Als rückwärts sperrendes Ventil kann insbesondere eine Diode eingesetzt werden. Zur Reduzierung der Durchlassverluste kann die Diode durch einen invers betriebenen MOSFET ersetzt werden, dessen Kanal beim Stromfluss über die Inversdiode zusätzlich eingeschaltet wird.

Solange die Hauptspannungsquelle noch nicht zugeschaltet ist, insbesondere wenn die Spannung noch nicht an den Anschlussklemmen der Hauptspannungsquelle anliegt, können die sicherheitsrelevanten Komponenten auch nicht über den DC/DC-Wandler aus der Hauptspannungsquelle versorgt werden. In diesem Fall erfolgt die Spannungsversorgung der sicherheitsrelevanten Komponenten über das rückwärts sperrfähige Ventil, welches den Stromfluss nur in Richtung von der Hilfsspannungsquelle zu den sicherheitsrelevanten Komponenten und nicht umgekehrt durchlässt. Das heißt, vor dem Einschalten der Hauptspannungsquelle werden die sicherheitsrelevanten Komponenten über einen Schalter oder ein rückwärts sperrendes Ventil aus der Hilfsspannungsquelle versorgt. Da die Hauptspannungsquelle häufig über eine sicherheitsrelevante Komponente, z.B. eine Schutz- und Steuerschaltung, abgesichert ist und nur eingeschaltet werden kann, wenn die entsprechende sicherheitsrelevante Komponente das Einschalten frei gibt, ist sichergestellt, dass die Hauptspannungsquelle eingeschaltet werden kann und nach dem Einschalten eine Spannungsversorgung der sicherheitsrelevanten Komponenten über den DC/DC-Wandler erfolgt.

Das erfindungsgemäße Verfahren zum Laden der Hilfsspannungsquelle ermöglicht das Laden von Hauptspannungsquelle und die Hilfsspannungsquelle zu unterschiedlichen Zeiten. Die Hilfsspannungsquelle kann unabhängig vom Laden der Hauptspannungsquelle geladen werden. Insbesondere kann die Hilfsspannungsquelle auch geladen werden, wenn das Boot nicht an Land angelegt hat.

Die Erfindung sowie weitere Details der Erfindung werden in dem nachfolgenden Ausführungsbeispiel näher erläutert. Hierbei zeigen
- Figur 1: eine erfindungsgemäße Stromversorgung auf einem Boot und
- Figur 2: eine weitere Ausführungsform der Erfindung.

Ein Boot mit einem Elektroantrieb 1 weist eine Hochvoltspannungsquelle 2 auf, an die der Elektroantrieb 1 angeschlossen ist. Die Hochvoltspannungsquelle 2 ist eine aufladbare Lithium-Ionen-Batterie, die eine maximale Ladung von beispielsweise 80 Ah, 100 Ah, 150 Ah oder 200 Ah besitzt und eine Nominalspannung von mehr als 200 V, beispielsweise 300 V, 350 V oder 400 V aufweist. Weitere Leistungsverbraucher können ebenfalls an die mit der Hochvoltspannungsquelle 2 verbundene Versorgungsleitung 3 angeschlossen sein.

Die Hochvoltspannungsquelle 2 kann über ein auf dem Boot befindliches und an die Versorgungsleitung 3 angeschlossenes Hauptladegerät 4 geladen werden. Zum Laden der Hochvoltspannungsquelle 2 wird das Hauptladegerät 4 mit einer in der Figur nicht dargestellten Stromversorgung verbunden, welche sich außerhalb des Bootes, beispielsweise an Land, befindet. Die Schnittstelle zwischen den elektrischen Systemen auf dem Boot und denen an Land ist mit dem Bezugszeichen 7 gekennzeichnet.

Auf dem Boot ist weiterhin eine Niedervoltspannungsquelle 5 vorgesehen, welche eine Klemmenspannung von beispielsweise 12 V, 24 V oder 48 V aufweist. An die Niedervoltspannungsquelle 5 sind mehrere dem Komfort der Bootsbesatzung dienende elektrische Komponenten sowie sicherheitsrelevante Komponenten, wie Steuereinrichtungen, ein Navigationssystem und insbesondere eine Sicherheitsschaltung, welche die Hochvoltspannungsquelle 2 mit der Versorgungsleitung 3 verbindet oder von dieser trennt.

Erfindungsgemäß ist an Bord ein Hilfsladegerät 6 vorgesehen, welches mit der Versorgungsleitung 3 verbunden ist. Das Hilfsladegerät 6 umfasst einen DC/DC-Wandler und ermöglicht das Laden der Niedervoltspannungsquelle 5 aus der Hochvoltspannungsquelle 2.

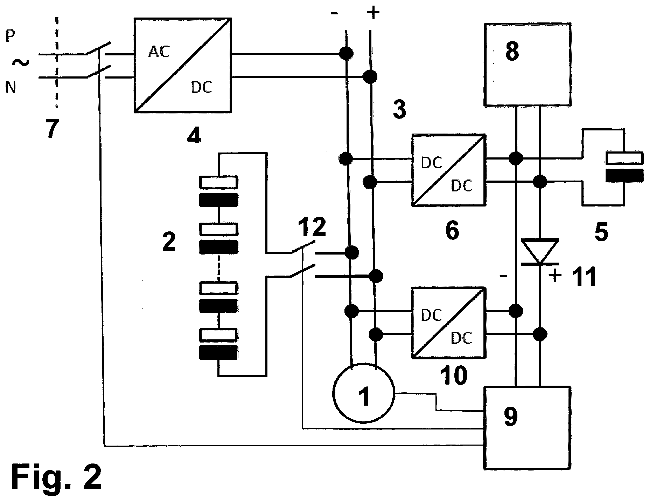

In Figur 2 ist eine weitere Ausführungsform der erfindungsgemäßen Schaltung gezeigt. Gleiche Komponenten sind in beiden Figuren mit denselben Bezugszeichen versehen.

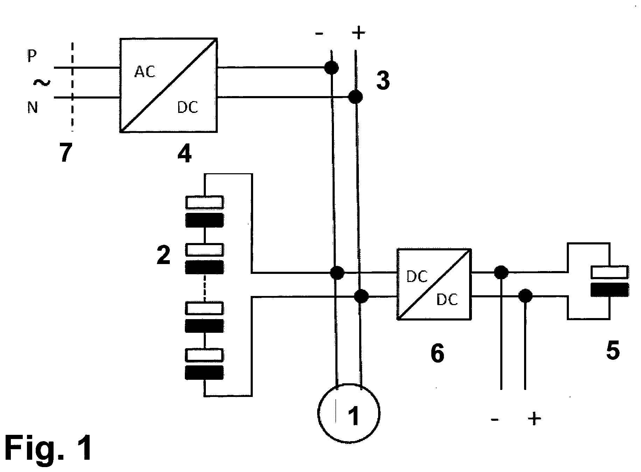

Die Schaltung von Elektromotor 1, Hochvoltspannungsquelle 2, Hauptladegerät 4, Niedervoltspannungsquelle 5 und Hilfsladegerät 6 entspricht der Schaltung nach Figur 1.

An die Niedervoltspannungsquelle 5 sind zum einen Zusatzkomponenten 8, wie zum Beispiel Beleuchtung oder Unterhaltungselektronik, zum anderen sicherheitsrelevante Komponenten 9 angeschlossen. In Figur 2 ist beispielhaft für eine sicherheitsrelevante Komponente 9 eine Sicherheitsschaltung vorgesehen, welche im Bedarfsfall die Schalter 12 öffnet und so die Anschlussklemmen der Hochvoltspannungsquelle 2 spannungsfrei schaltet.

Die Zusatzkomponenten 8 sind direkt an die Niederspannungsquelle 5 angeschlossen und werden aus dieser mit Strom versorgt. Erfindungsgemäß ist an Bord ein Hilfsladegerät 6 vorgesehen, welches mit der Versorgungsleitung 3 verbunden ist. Das Hilfsladegerät 6 umfasst einen DC/DC-Wandler und ermöglicht das Laden der Niedervoltspannungsquelle 5 aus der Hochvoltspannungsquelle 2.

In der Ausführungsform nach Figur 2 dient die Niedervoltspannungsquelle 5 auch zur Versorgung von Zusatzkomponenten 9. In diesem Fall ist es günstig, eine elektrische Entkopplung der Spannungsversorgung der Zusatzkomponenten und der Spannungsversorgung der system- und sicherheitsrelevanten Komponenten vorzusehen.

Die sicherheitsrelevanten Komponenten 9 werden über einen weiteren DC/DC-Wandler 10, der an die Versorgungsleitung 3 angeschlossen ist, mit Strom versorgt. Zur elektrischen Entkopplung wird ein rückwärts sperrendes Ventil 11, beispielsweise eine Diode, eingesetzt. Für die elektrische Spannungsversorgung der sicherheitsrelevanten Komponenten wird ein DC/DC-Wandler 10 eingesetzt, der die Niedervoltspannung für die sicherheitsrelevanten Komponenten aus der Hochvoltspannungsquelle 2 bereitstellt.

Die sicherheitsrelevanten Komponenten 9 werden damit entkoppelt von den sonstigen Zusatzkomponenten 8 und entkoppelt von der Niedervoltspannungsquelle 5 versorgt. Sollte es zu einer kurzfristigen Überlastung der Niedervoltspannungsquelle 5 durch angeschlossene Zusatzkomponenten 8 kommen, wäre der Betrieb der sicherheitsrelevanten Steuerungen 9 nicht gefährdet, da diese Steuerungen 9 über eine eigene Versorgung 10 verfügen und von der Niedervoltspannungsquelle 5 durch das rückwärts sperrfähige Ventil 11 entkoppelt sind.

Das rückwärts sperrfähige Ventil 11 kann im einfachsten Fall eine Diode sein. Zur Reduzierung der Durchlassverluste kann die Diode durch einen invers betriebenen MOSFET ersetzt werden, dessen Kanal beim Stromfluss über die Inversdiode zusätzlich eingeschaltet wird.

Durch die Verbindung des primären Niedervoltkreises mit der Niedervoltspannungsquelle 5 wird eine sichere Versorgung der Zusatzkomponenten 8 bei impulsförmigem Leistungsbedarf sichergestellt. Der Betrieb eines Hilfsmotors für das Trimmen und / oder das Tilten eine Außenbordmotors stellt eine typische solche Impulslast dar, die durch die Niedervoltspannungsquelle 5 gepuffert werden muss.

## Patentansprüche

1. Verfahren zum Laden einer auf einem Boot mit einem Elektroantrieb befindlichen Hilfsspannungsquelle, die Energie für mindestens eine Zusatzkomponente bereitstellt, wobei sich auf dem Boot eine Hauptspannungsquelle befindet, die Energie für den Elektroantrieb zur Verfügung stellt, wobei die Hilfsspannungsquelle mittels der Hauptspannungsquelle geladen wird, **dadurch gekennzeichnet, dass** die Hauptspannungsquelle eine Schutz- und/oder Steuerschaltung besitzt, wobei die Schutz- und/oder Steuerschaltung zur Spannungsversorgung über einen DC/DC-Wandler an die Hauptspannungsquelle angeschlossen ist und dass die Schutz- und/oder Steuerschaltung über einen Schalter oder ein rückwärts sperrendes Ventil mit der Hilfsspannungsquelle verbunden ist.

2. Verfahren nach Anspruch 1, **dadurch gekennzeichnet, dass** die Hauptspannungsquelle eine Klemmenspannung von mehr als 60 V, mehr als 100 V oder mehr als 200 V aufweist, und die Hilfsspannungsquelle eine Klemmenspannung von maximal 48 V, maximal 24 V oder maximal 12 V, aufweist.

3. Verfahren nach einem der Ansprüche 1 oder 2, **dadurch gekennzeichnet, dass** die Hauptspannungsquelle und die Hilfsspannungsquelle zu unterschiedlichen Zeiten geladen werden.

4. Verfahren nach einem der Ansprüche 1 bis 3, **dadurch gekennzeichnet, dass** auf dem Boot eine Schutz- und Steuerschaltung für die Hauptspannungsquelle und ein Ladegerät für die Hauptspannungsquelle vorgesehen sind, wobei die Schutz- und Steuerschaltung für die Hauptspannungsquelle und / oder das Ladegerät von der Hilfsspannungsquelle mit Strom versorgt werden.

5. Verfahren nach einem der Ansprüche 1 bis 4, **dadurch gekennzeichnet, dass** die Niederspannungsquelle über eine Ladung von mindestens 30 Ah, vorzugsweise mindestens 40 Ah verfügt.

6. Verfahren nach einem der Ansprüche 1 bis 5, **dadurch gekennzeichnet, dass** das rückwärts sperrende Ventil eine Diode ist.

7. Verfahren nach einem der Ansprüche 1 bis 5, **dadurch gekennzeichnet, dass** das rückwärts sperrende Ventil ein MOSFET, insbesondere ein in Inversrichtung betriebener MOSFET, ist.

8. Verfahren nach einem der Ansprüche 1 bis 7, **dadurch gekennzeichnet, dass** das rückwärts sperrende Ventil ein Schaltkreis auf der Basis einer MOSFET-Struktur ist, bei dem im leitenden Zustand der MOSFET-Kanal eingeschaltet wird (Synchrongleichrichtung), so dass die Durchlassverluste reduziert werden.

## Claims

1. Method for charging an auxiliary voltage source situated on a boat with an electric drive, said auxiliary voltage source providing energy for at least one additional component, wherein there is on the boat a main voltage source which provides energy for the electric drive, wherein the auxiliary voltage source is charged by means of the main voltage source, **characterised in that** the main voltage source has a protection and/or control circuit, wherein the protective circuit and/or control circuit is connected to the main voltage source via a DC/DC converter and that the protective circuit and/or control circuit is connected via a switch or a reverse blocking valve with the auxiliary voltage source.

2. Method according to claim 1, **characterised in that** the main voltage source has a clamping voltage of more than 60 V, more than 100 V or more than 200 V, and the auxiliary voltage source has a clamping voltage of maximum 48 V, maximum 24 V or maximum 12 V.

3. Method according to one of claims 1 or 2, **characterised in that** the main voltage source and the auxiliary voltage source are charged at different times.

4. Method according to one of claims 1 to 3, **characterised in that** on the boat are provided a protective circuit and control circuit for the main voltage source and a charging device for the main voltage source, wherein the protective circuit and control circuit for the main voltage source and/or the charging device are supplied with electricity from the auxiliary voltage source.

5. Method according to one of claims 1 to 4, **characterised in that** the low voltage source uses a charge of at least 30 Ah, preferably at least 40 Ah.

6. Method according to one of claims 1 to 5, **characterised in that** the reverse blocking valve is a diode.

7. Method according to one of claims 1 to 5, **characterised in that** the reverse blocking valve is a MOSFET, in particular a MOSFET operated in opposite direction.

8. Method according to one of claims 1 to 7, **characterised in that** the reverse blocking valve is a circuit on the basis of a MOSFET structure, by which in a conducting state the MOSFET-channel is switched on (synchronous rectification), so that the forward losses are reduced.

## Revendications

1. Procédé de chargement d'une source de tension auxiliaire, qui se trouve sur un bateau muni d'une propulsion électrique et qui fournit de l'énergie pour au moins un élément accessoire,
dans lequel une source de tension principale, qui met à disposition de l'énergie pour la propulsion électrique, se trouve sur le bateau,
dans lequel la source de tension auxiliaire est chargée au moyen de la source de tension principale,
**caractérisé**
**en ce que** la source de tension principale a un circuit de protection et/ou un circuit de commande, lequel circuit de protection et/ou de commande est raccordé, pour l'alimentation en tension, à la source de tension principale par l'intermédiaire d'un convertisseur DC/DC,
et **en ce que** le circuit de protection et/ou de commande est relié à la source de tension auxiliaire par l'intermédiaire d'un commutateur ou d'une soupape bloquant en sens inverse.

2. Procédé selon la revendication 1, **caractérisé en ce que** la source de tension principale a une tension aux bornes de plus de 60 V, de plus de 100 V ou de plus de 200 V, et la source de tension auxiliaire a une tension aux bornes de 48 V au maximum, de 24 V au maximum ou de 12 V au maximum.

3. Procédé selon l'une quelconque des revendications 1 ou 2, **caractérisé en ce que** la source de tension principale et la source de tension auxiliaire sont chargées à des moments différents.

4. Procédé selon l'une quelconque des revendications 1 à 3, **caractérisé en ce qu'**il est prévu sur le bateau un circuit de protection et de commande pour la source de tension principale et un appareil de chargement pour la source de tension principale,
dans lequel circuit de protection et de commande pour la source de tension principale et/ou l'appareil de chargement sont alimentés en courant par la source de tension auxiliaire.

5. Procédé selon l'une quelconque des revendications 1 à 4, **caractérisé en ce que** la source de basse tension dispose d'une charge d'au moins 30 Ah, de préférence d'au moins 40 Ah.

6. Procédé selon l'une quelconque des revendications 1 à 5, **caractérisé en ce que** la soupape bloquant en sens inverse est une diode.

7. Procédé selon l'une quelconque des revendications 1 à 5, **caractérisé en ce que** la soupape bloquant en sens inverse est un MOSFET, en particulier un MOSFET exploité en sens inverse.

8. Procédé selon l'une quelconque des revendications 1 à 7, **caractérisé en ce que** la soupape bloquant en sens inverse est un circuit sur la base d'une structure MOSFET, avec lequel le canal MOSFET est connecté à l'état conducteur (redressement synchrone) de telle sorte que les pertes à l'état passant sont réduites.
